# EUROPÄISCHE PATENTSCHRIFT

(11) **EP 0 613 915 B1**
(45) Veröffentlichungstag und Bekanntmachung des Hinweises auf die Patenterteilung: **02.05.1997**
(21) Anmeldenummer: 94102882.1
(22) Anmeldetag: 25.02.1994
(51) Int. Cl.: C08G 18/28, C08G 18/48, C08G 18/08, C08J 3/03

(54) **Ungesättigte Polyurethane und deren Verwendung als reaktive Emulgatoren**
Unsaturated polyurethanes and their use as a reactive emulsifier
Polyuréthanes insaturés et leur utilisation comme émulsifiant réactif

(30) Priorität: 05.03.1993 DE 4306947
(43) Veröffentlichungstag der Anmeldung: 07.09.1994
(73) Patentinhaber: HOECHST AKTIENGESELLSCHAFT, 65926 Frankfurt am Main (DE)
(72) Erfinder: Brindöpke, Gerhard, Dr., D-65843 Sulzbach (DE); Zöller, Joachim, Dr., D-55128 Mainz (DE)

(56) Entgegenhaltungen:
- FR-A- 2 084 434
- GB-A- 1 520 940

## Beschreibung

Die Erfindung betrifft neue, hydrophil modifizierte, olefinisch ungesättigte Polyurethane, ihre Verwendung als reaktive Emulgatoren für hydrophobe, radikalisch und/oder oxidativ härtbare Kunstharze bei der Herstellung von wäßrigen Kunstharzdispersionen und Beschichtungsmittel, deren Bindemittel im wesentlichen aus derartigen Dispersionen bestehen.

In Wasser dispergierbare Polyurethane mit Doppelbindungen sind bereits bekannt (vgl. z.B. EP-A 00 98 752 und DE-OS 29 36 039). Die Hydrophilie dieser bekannten Systeme basiert auf der Anwesenheit von ionischen Zentren, insbesondere von Carboxylat- oder Sulfonatgruppen, die als Gegenionen Alkalikationen oder Ammoniumionen aufweisen, die in den aus den Systemen letztendlich erhaltenen Überzüge verbleiben und deren Wasserresistenz erheblich beeinträchtigen. Die oftmals vorliegenden Amine können im übrigen eine Vergilbung der Lacküberzüge bewirken.

In DE-OS 38 29 588 werden wasserdispergierbare Allylurethane beschrieben, die auch ungesättigte Dicarbonsäurereste enthalten können. Die Wasserdispergierbarkeit wird hier durch Einbau einer speziellen Kombination von Polyethylenglykolen erreicht. Der relativ hohe Gehalt an Polyethylenglykolen führt jedoch zu Bindemitteln mit nicht ausreichenden Lackfilmeigenschaften.

Eine andere Möglichkeit, zu wasserverdünnbaren Produkten zu gelangen, besteht im Einsatz von externen Emulgatoren. So werden beispielsweise gemäß US-A 4 070 323 Acryloylgruppen tragende Polyurethane mit Hilfe von anionischen oder kationischen Öl-in-Wasser-Emulgatoren (z.B. Natriumlaurylsulfat) in Wasser dispergiert. Diese Emulgatoren werden bei der radikalischen Vernetzung nicht in den Lackfilm eingebaut. Infolgedessen wird der Grad der erreichbaren Wasserfestigkeit der Lackfilme nicht unwesentlich herabgesetzt.

DE-OS 39 00 257 beschreibt nichtionische lineare hydrophile (Meth)Acryloylgruppen-haltige Polyurethane und deren Verwendung als reaktive Emulgatoren für in Wasser nicht dispergierbare Urethan(meth)acrylate. Mit diesen Emulgatoren sind jedoch nur eine begrenzte Anzahl von Kunstharzen emulgierbar; so sind sie z.B. nicht in der Lage, styrolfreie, ungesättigte Polyesterharze zu emulgieren. DE 40 04 651 beschreibt lufttrocknende Polyurethanharze, die sowohl Polyole wie auch Monoalkohole enthalten, die lufttrocknende Gruppen enthalten, in die bis zu 40 % konventionelle Alkydharze einemulgiert werden können. EP-A 0 501 247 beschreibt olefinisch ungesättigte Polyurethane, die eine β,γ-ethylenisch ungesättigte Etheralkohol-Komponente enthalten und die als reaktive Emulgatoren für ungesättigte Polyesterharze eingesetzt werden können.

Es war die der Erfindung zugrundeliegende Aufgabe, Emulgatoren zu entwickeln, die eine Vielfalt von Bindemitteln in die wäßrige Phase zu überführen vermögen und die die Filmeigenschaften insbesondere in Bezug auf Glanz und Wasserfestigkeit nicht negativ beeinflussen.

Diese Aufgabe konnte mit der Bereitstellung der nachstehend näher beschriebenen erfindungsgemäßen hydrophilen Polyurethane gelöst werden.

Gegenstand der Erfindung sind ungesättigte Polyurethane mit einem Anteil von 20 - 80 Gew.-% an Polyethylenglykol-Einheiten, herstellbar durch Umsetzung von
a) mindestens einem organischen Polyisocyanat,
b) einem ungesättigten Fettalkohol, dessen Polyalkylenglykolether, oder einem eine Hydroxylgruppe enthaltenden Ester ungesättigter Säuren,
c) einem oder mehreren Diolen, die zusätzlich mindestens eine weitere Hydroxylgruppe oder Carboxylgruppe enthalten, und
d) einem Polyethylenglykol des Molekulargewichtsbereichs von 750 bis 10000, unter Einhaltung eines NCO/OH-Äquivalentverhältnisses, bezogen auf alle Ausgangskomponenten a) bis d), von 0,7:1 bis 1,2:1.

Gegenstand der Erfindung ist auch die Verwendung dieser erfindungsgemäßen Polyurethane als reaktive Emulgatoren bei der Herstellung von wäßrigen Kunstharzdispersionen für in Wasser nicht dispergierbare, radikalisch und/oder oxidativ härtbare Kunstharze.

Bei den erfindungsgemäßen Polyurethanen handelt es sich im wesentlichen um Umsetzungsprodukte der bereits obengenannten Ausgangskomponenten a) bis d), wobei bei der Herstellung der Polyurethane vorzugsweise pro Mol der Komponente a) 0,1 bis 1 Mol der Komponente b), 0,1 bis 1 Mol der Komponente c) und 0,1 bis 0,7 Mol der Komponente d) zum Einsatz gelangen.

Die Komponente a) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise ein Molekulargewicht von 168 bis 1.000, vorzugsweise 168 bis 300 aufweisen. Geeignet sind beispielsweise 1,6 Diisocyanatohexan (HDI), 1 -Isocyanato-3,3,5-trimethyl-5-isocyanatomethyl-cyclohexan (IPDI), Tetramethylenxylylendiisocyanat (TMXDI), 4,4'-Diisocyanatodicyclohexylmethan, 4,4'-Diisocyanatodiphenylmethan, dessen technischen Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol. Diisocyanate der beispielhaft genannten Art sind als Komponente a) bevorzugt, jedoch sind auch höherfunktionelle Polyisocyanate wie beispielsweise Biuret-, Isocyanurat- oder Urethanmodifizierte Polyisocyanate auf Basis der beispielhaft genannten einfachen Diisocyanate grundsätzlich geeignet. Diese Derivate weisen im allgemeinen ein bis zu 1.000 liegendes Molekulargewicht auf. Die Herstellung derartiger Derivate ist beispielsweise in US-PS 3 124 605, US-PS 3 183 112, US-PS 3 919 218 oder US-PS 4 324 879 beschrieben.

Als ungesättigte Fettalkohole, die einfach oder mehrfach ungesättigt sein können, kommen insbesondere solche mit 10 bis 20 C-Atomen in Frage, wie Oleylalkohol, Linolalkohol oder Linolenalkohol, sowie die entsprechenden Polyethylenglykolether mit 1 bis 20, vorzugsweise 1 bis 12 Ethylenoxid-Einheiten. Die eine Hydroxylgruppe enthaltenden Ester ungesättigter Säuren sind beispielsweise Mono(meth)acrylsäureester von C₂-C₄-Diolen wie etwa Ethylenglykol, Butandiol oder 1,2-Propandiol oder Umsetzungsprodukte aus Epoxiden, wie beispielsweise Cardura® E 10 (Versaticsäureglycidylester), mit (Meth)acrylsäure oder mit ungesättigten Fettsäuren, beispielsweise mit solchen Fettsäuren, wie sie den oben erwähnten Fettalkoholen entsprechen. Als Komponente b) kommen auch Teilester solcher ungesättigter Fettsäuren mit Polyhydroxyverbindungen, wie beispielsweise Glycerin, Trimethylolpropan oder Pentaerythrit in Frage.

Als höherfunktionelle Komponente c), die bevorzugt 3 bis 6 Hydroxyl- und/oder Carboxylgruppen enthält, werden Trimethylolpropan, Trimethylolethan, Glycerin, Ditrimethylolpropan, Pentaerythrit und Dipentaerythrit, sowie Bishydroxyalkancarbonsäuren wie z.B. Dimethylolpropionsäure bevorzugt, wobei auch Mischungen zweier oder mehrerer dieser Verbindungen verwendet werden können.

Bei der Komponente d) handelt es sich um lineare Polyethylenglykole eines als Zahlenmittel bestimmten Molekulargewichts von 750 bis 10.000, vorzugsweise 1.000 bis 6.000, deren Alkylenoxid-Einheiten zumindest zu 80 Mol-%, vorzugsweise zu 100 Mol-%, Ethylenoxid-Einheiten sind.

Der Begriff "Polyethylenglykole" soll somit nicht nur reine Polyethylenglykole, deren Alkylenoxid-Einheiten ausschließlich Ethylenoxid-Einheiten sind, sondern auch Polyalkylenglykole umfassen, deren Alkylenoxid-Einheiten zumindest zu 80 Mol-% Ethylenoxid-Einheiten sind. Derartige "gemischte" Polyalkylenglykole entstehen beispielsweise durch Verwendung von Gemischen verschiedener Alkylenoxide, beispielsweise von Ethylenoxid und Propylenoxid im Molverhältnis ≧ 8:2, bei der Herstellung der Polyethylenglykole durch Alkoxylierung geeigneter zweiwertiger Startermoleküle wie beispielsweise Wasser, Ethylenglykol oder Propylenglykol. Vorzugsweise besteht die Komponente d) jedoch aus reinen Polyethylenglykolen.

Die Herstellung der erfindungsgemäßen, als Emulgatoren zu verwendenden, hydrophilen Polyurethane durch Umsetzung der genannten Ausgangskomponenten kann in Substanz oder in gegenüber Isocyanatgruppen inerten Lösungsmitteln wie beispielsweise Aceton, Methylethylketon, Ethylacetat, Butylacetat, Toluol oder Gemische derartiger Lösungsmittel erfolgen, wobei vorzugsweise Reaktionstemperaturen von 20 bis 200°C, insbesondere von 50 bis 150°C, eingehalten werden.Dabei können die Komponenten b) bis d) gleichzeitig oder schrittweise mit der Komponente a) zur Reaktion gebracht werden.

In der Praxis kann somit beispielsweise so vorgegangen werden, daß die Komponenten b) bis d) vorgelegt und innerhalb der obengenannten Temperaturbereiche mit dem Isocyanat a) umgesetzt wird, bis der NCO-Gehalt auf unter 0,1 Gew.-% abgefallen ist.

Grundsätzlich werden hierbei Art und Mengenverhältnisse der Ausgangskomponenten innerhalb der genannten Bereiche so gewählt, daß, bezogen auf die Komponenten a) bis d), ein NCO/OH-Äquivalentverhältnis von 0,7:1 bis 1,2:1 gewährleistet ist.

Die Urethanbildungsreaktionen können in an sich bekannter Weise z.B. mit Zinnoctoat, Dibutylzinndilaurat oder tertiären Aminen katalysiert werden. Ebenso kann das Polyurethan durch Zugabe geeigneter Inhibitoren und Antioxydantien von je 0,001 bis 0,3 Gew.-%, bezogen auf die Gesamtmischung, vor vorzeitiger und unerwünschter Polymerisation geschützt werden.

Die auf diese Weise erhaltenen hydrophilen ungesättigten Polyurethane weisen ein nach der Methode der Gelpermeationschromatographie unter Verwendung von Polystyrol als Standard ermittelbares Molekulargewicht Mn (Zahlenmittel) von 1.000 bis 20.000, vorzugsweise 2.000 bis 15.000, einen Gehalt an olefinischen Doppelbindungen (berechnet als -C = C-, Molekulargewicht = 24) von mindestens 0,7 Gew.-%, vorzugsweise 1,0 bis 6,0 Gew.-% und einen Gehalt an Polyethylenglykol eingebauten Einheiten von 20 bis 80 Gew.-%, vorzugsweise 30 bis 75 Gew.-%, auf.

Die hydrophilen Polyurethane sind wertvolle Emulgatoren für hydrophobe, radikalisch und/oder oxidativ härtbare Kunstharze. Diese Kunstharze weisen im allgemeinen ein nach der Methode der Gelpermeationschromatographie unter Verwendung von Polystyrol als Standard ermittelbares Molekulargewicht Mn von 500 bis 20.000, vorzugsweise 500 bis 6.000 auf. Durch ihren Gehalt an Doppelbindungen können diese Polyurethane als reaktive Emulgatoren bezeichnet werden.

Bei diesen Kunstharzen handelt es sich vorzugsweise um kommerziell erhältliche Harze aus der Gruppe der Alkydharze, UV-Bindemittel, Polyesterharze, Polyacrylate, Polyepoxide usw., die gegebenfalls nachträglich geringfügig modifiziert werden, um z.B. deren Hydrolysestabilität zu erhöhen.

Das Verhältnis von hydrophobem Kunstharz zu Emulgator wird so gewählt, daß in der Mischung vorzugsweise 50 bis 95, insbesondere 70 bis 93 Gew.-Teile der genannten hydrophoben Kunstharze in Abmischung mit vorzugsweise 5 bis 50, insbesondere 7 bis 30 Gew.-Teilen der genannten, als Emulgatoren wirkenden, hydrophilen Polyurethane vorliegen. Es ist jedoch vorteilhaft, Art und Mengenverhältnisse der Einzelkomponenten so zu wählen, daß der Gesamtgehalt der in Wasser dispergierbaren Gemische aus Kunstharz und Emulgator an von der Komponente d) herrührenden Ethylenoxid-Einheiten maximal 20, vorzugsweise maximal 17 Gew.-%, beträgt. Die Herstellung der Gemische von Kunstharz und Emulgator kann durch einfaches Abmischen der Einzelkomponenten, gegebenenfalls in Gegenwart von inerten Lösemitteln der oben bereits beispielhaft genannten Art, erfolgen.

Zur Herstellung der wäßrigen Dispersionen werden die Gemische in Wasser dispergiert, was durch einfaches Einrühren von Wasser in die vorgelegten Kunstharze mittels üblicher Dissolver oder anderer geeigneter Rührorgane oder auch durch Eingießen der Mischung in Wasser unter heftigem Rühren erfolgen kann. Gegebenenfalls kann zunächst ein Teil des Wassers zu der oben beschriebenen Mischung gegeben werden und dann diese Mischung unter Rühren in die Restmenge Wasser gegossen werden. Das Harz kann auch invers dispergiert werden. Man erhält auf diese Weise stabile Öl-in-Wasser-Emulsionen.

Die auf diese Weise erhaltenen wäßrigen Dispersionen sind eine wertvolle Komponente für Überzugsmittel. Sie können allein oder in Kombination mit den aus der Lacktechnologie bekannten Hilfs- und Zusatzmitteln wie z.B. Füllstoffen, Pigmenten, Lösemitteln, Verlaufshilfsmitteln und dergleichen zur Herstellung von Beschichtungen auf beliebigen Substraten verwendet werden.

Geeignete Substrate sind Papier, Kartonage, Leder, Holz, Kunststoffe, Kompositwerkstoffe, Vlies, Folien, Textilien, keramische Materialien, mineralische Materialien, Glas, Metall, beschichtetes Metall, Kunstleder, fotografische Materialien wie z.B. mit fotografischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie gegebenenfalls mitverwendeten inerten Lösemitteln kann die Vernetzung der Überzüge entweder mit Hilfe energiereicher Strahlung, wie UV-Licht, Elektronen- oder Gammastrahlen oder durch Härtung mit Metallsalzen von Sikkativsäuren und gegebenenfalls (Hydro)-Peroxiden oder anderen Sikkativen bei Temperaturen zwischen Raumtemperatur und 250 °C erfolgen.

Im Falle der Vernetzung mittels UV-Bestrahlung ist es notwendig, den Überzugsmassen Fotoinitiatoren hinzuzufügen. Als Fotoinitiatoren sind die üblicherweise eingesetzten Verbindungen geeignet, wie sie z.B. in Houben Weyl, Methoden der organischen Chemie, Band E 20, Seite 80 ff., Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-propan-1-on.

Die erwähnten Fotoinitiatoren, die je nach Verwendungszweck der erfindungsgemäßen Massen in Mengen zwischen 0,1 und 10 Gew.-%, vorzugsweise 0,1 bis 5 Gew.-%, bezogen auf das Gewicht der dispergiert vorliegenden Kunstharze, eingesetzt werden, können für sich allein oder, gegebenenfalls unter Ausnutzung synergistischer Effekte, auch in Kombination miteinander verwendet werden. Die bei der oxidativen Vernetzung eingesetzten Metallsalze von Sikkativsäuren sind z.B. Cobalt, Blei und Mangansalze von Säuren wie Leinölfettsäuren, Tallölfettsäuren, Sojaölfettsäuren, von Harzsäuren, wie Abietinsäure und Naphthensäure oder von Essigsäure und Isooctansäure. Sie werden in solchen Mengen eingesetzt, daß der Metallgehalt, bezogen auf das Gewicht der dispergiert vorliegenden hydrophilen und hydrophoben Kunstharze, 0,005 bis 1 Gew.-% entspricht.

Als (Hydro)-Peroxide seien beispielhaft genannt: Wasserstoffperoxid, Di-tert.-butylperoxid, Benzoylperoxid, Cyclohexanonperoxid, Methylethylketonperoxid, Acetylacetonperoxid, Dinonylperoxid, Bis-(tert.-butylcyclohexyl)-peroxydicarbonat, tert.-Butylhydroperoxid,Cumolhydroperoxid,2,5-Dimethylhexan-2,5-hydroperoxid und Diisopropyl-benzol-monohydroperoxid. Vorzugsweise werden diese (Hydro)-Peroxide in Mengen von 1 bis 10 Gew.-%, bezogen auf das Gewicht der dispergiert vorliegenden hydrophilen und hydrophoben Kunstharze, eingesetzt.

In den nachfolgenden Beispielen beziehen sich alle Mengen- und Prozentangaben auf das Gewicht.

### Beispiele

### Herstellung eines Bindemittels:

### Beispiel B1:

870 Teile EUREPOX® RV-C (Epoxidharz, Epoxidgehalt: 9,1 %), 2,5 Teile Hydrochinonmonomethylether und 6 Teile Triphenylphosphin werden unter Durchleiten von Luft auf 90 °C erhitzt und binnen 2 h mit 335 Teilen Acrylsäure versetzt. Unter gleichen Bedingungen wird bis zu einer Säurezahl <5 nachgerührt.

Man erhält ein hellgelbes Produkt mit einer Viskosität von 6100 mPas und einem Doppelbindungsgehalt von 9,1 %.

### Herstellung eines Emulgators:

### Beispiel E1:

300 Teile Polyethylenglykol (mittl. Molekulargewicht 6000) und 3,4 Teile Dimethylolpropionsäure werden unter Rühren auf 100 °C erhitzt und durch Anlegen von Wasserstrahlvakuum entwässert. Nach Abkühlung auf 55 °C werden 0,2 Teile Dibutylzinndilaurat und 84,4 Teile Sartomer 454 (handelsübliches Triacrylat eines ethoxylierten Trimethylolpropans der Fa. Cray-Valley) zugegeben. Unter Durch-leiten von Luft werden binnen 30 min 17,4 Teile Tolylen-diisocyanat zugetropft; nach weiteren 15 min werden 16,7 Teile eines Umsetzungsproduktes aus 12,9 Teilen Cardura® E10 (handelsüblicher Glycidylester der Versaticsäure der Fa. SHELL) und 3,8 Teilen Acrylsäure zugetropft. Bei gleicher Temperatur wird dann bis Erreichen eines NCO-Gehaltes < 0,1 % nachgerührt. Nach Zugabe von 0,3 Teilen Hydrochinonmonomethylethers wird dann mit 927 Teilen Wasser verdünnt.

Man erhält eine trübe Emulgatorlösung mit einer Viskosität von 1200 mPas und einem pH-Wert von 3,8.

### Beispiel E2

55 g Leinölfettsäure und 51 g Cardura® E10 werden bei 120 °C zur Reaktion gebracht (Katalysator: Chromoctoat) bis eine Säurezahl von < 1 erreicht ist (Rohstoff III).

40,2 g Dimethylolpropionsäure werden bei ca. 80 °C in 400 g Polyethylenglykol 2000 gelöst. Zu der Lösung gibt man 162 g Solvesso 100 und den Rohstoff III. Nach Erwärmen auf 70 °C wird dann 104,4 g Toluylendiisocyanat so zugetropft, daß eine Temperatur von 75 °C nicht überschritten wird (ca. 30 min). Hat man alles TDI zugetropft, so hält man die Temperatur solange bis der Isocyanatgehalt auf < 0,1 % gefallen ist.
Man erhält ein gelbliches zähes Harz.

### Beispiel E3

112 g Sojaölfettsäure wird mit 26,8 g Trimethylolpropan mit Dibutylzinnoxid als Katalysator bei Temperaturen bis zu 260 °C verestert bis eine Säurezahl < 2 erreicht ist. Nach dem Abkühlen wird 1200 g Polyethylenglykol 6000, 13,4 g Dimethylolpropionsäure und 355 g Solvesso 100 zugegeben und die Mischung auf 70 °C erwärmt. Dann wird 69,6 g Toluylendiisocyanat so zugetropft, daß die Temperatur nicht über 75 °C steigt. Nach vollendeter Zugabe wird die Reaktionsmischung so lange auf der Temperatur gehalten bis der NCO-Gehalt auf < 0,1% gefallen ist.
Man erhält ein bräunliches zähes Harz.

### Beispiel E4

35,4 g Genapol® O-020 (ungesättigter Fettalkoholdiethylenglykolether) wird mit 400 g Polyethylenglykol 4000 und 6,7 g Dimethylolpropionsäure auf 70 °C erwärmt und 15 min gerührt. Dann wird 119 g Solvesso zugegeben und 34,8 g Toluylendiisocyanat so zugetropft, daß die Temperatur nicht über 75 °C steigt. Man hält die Reaktionsmischung so lange auf 70 °C bis ein NCO-Gehalt < 0,1 % erreicht ist.
Man erhält ein gelbliches zähes Harz.

### Herstellung einer Dispersion:

### Beispiel D1:

1610 Teile des Bindemittels B1 werden unter Rühren mit 560 Teilen des Emulgators E1 auf 40 °C erhitzt und homogenisiert. Binnen 5 min werden unter Rühren mit einem Dissolver (U = 20 m/sec.) 380 Teile Wasser eingetragen. Nach 15 min Rühren wird die Dispersion auf Raumtemperatur abgekühlt und mit 950 Teilen Wasser verdünnt.

Man erhält eine weiße milchige Dispersion mit einer Viskosität von 350 mPas und einem pH-Wert von 3,9.

### Beispiel D2

Zu 200 g eines handelsüblichen Alkydharzes (Alftalat AL 650 100 %) werden jeweils 37 g eines der Emulgatoren, die oben beschrieben sind, zugegeben und bei 70 °C ca. 30 min gerührt bis die Mischung homogen ist.

Nach Zugabe von 3 ml Ammoniakwasser (25 %) wird 345 g auf 70 °C erwärmtes E-Wasser sehr langsam unter heftigem Rühren zugetropft (ca. 3 Stunden).

Man erhält in jedem der Fälle eine milchige strukturviskose Dispersion.

### Beispiel D3:

100 Teile einer 70 % igen Lösung eines handelsüblichen hydroxylgruppenhaltigen Acrylatharzes (OH-Zahl: 145, Viskosität einer 60 % igen Lösung in Butylacetat: 780 mPas) werden bei 50 °C mit 11 Teilen einer 80 %igen Lösung des Emulgators E1 versetzt und homogenisiert.

Binnen 5 min werden unter Rühren mit einem Dissolver (U = 20 m/sec) 80 Teile Wasser eingetragen. Nach 15 min Rühren wird die Dispersion langsam unter Rühren und Zugabe von weiteren 72 Teilen Wasser auf Raumtemperatur abgekühlt.

Man erhält eine weiße milchige Dispersion mit einer Viskosität von 350 mPas und einem pH-Wert von 2,5.

## Patentansprüche

1. Ungesättigte Polyurethane mit einem Anteil von 20 bis 80 Gew.-% Polyethylenglykol-Einheiten, herstellbar durch Umsetzung von
a) mindestens einem organischen Polyisocyanat,
b) einem ungesättigten Fettalkohol, dessen Polyalkylenglykolether oder einem eine Hydroxylgruppe enthaltenden Ester ungesättigter Säuren,
c) einem oder mehreren Diolen, die zusätzlich mindestens eine weitere Hydroxylgruppe oder Carboxylgruppe enthalten und
d) einem Polyethylenglykol des Molekulargewichtsbereichs 750 bis 10.000, unter Einhaltung eines NCO/OH-Äquivalentverhältnisses, bezogen auf alle Ausgangskomponenten a) bis d), von 0,7:1 bis 1,2:1.

2. Polyurethane gemäß Anspruch 1, dadurch gekennzeichnet, daß die Komponente b) mehrfach ungesättigt ist.

3. Polyurethane gemäß Anspruch 1, dadurch gekennzeichnet, daß die Komponente b) ein (Meth)acrylat eines Diols ist.

4. Polyurethane gemäß Anspruch 1, dadurch gekennzeichnet, daß die Komponente b) ein Polyethylenglykolether eines ungesättigten C₁₀-C₂₀-Fettalkohols ist.

5. Polyurethane gemäß Anspruch 1, dadurch gekennzeichnet, daß die Komponente b) ein Umsetzungsprodukt einer ungesättigten Fettsäure mit säureglycidylester ist.

6. Polyurethane gemäß Anspruch 1, dadurch gekennzeichnet, daß die höher-funktionelle Komponente c) eine Bishydroxyalkancarbonsäure ist.

7. Verwendung der Polyurethane des Anspruchs 1 als reaktive Emulgatoren für hydrophobe, radikalisch und/oder oxidativ härtbare Kunstharze bei der Herstellung von wäßrigen Kunstharzdispersionen.

8. Wäßrige Dispersion von hydrophoben, radikalisch und/oder oxidativ härtbaren Kunstharzen, dadurch gekennzeichnet, daß sie ein ungesättigtes Polyurethan gemäß Anspruch 1 enthält.

## Claims

1. Unsaturated polyurethanes which contain from 20 to 80% by weight of polyethylene glycol units and can be prepared by reacting
a) at least one organic polyisocyanate,
b) an unsaturated fatty alcohol, a polyalkylene glycol ether thereof or an unsaturated acid ester containing one hydroxyl group,
c) one or more diols which additionally contain at least one further hydroxyl group or carboxyl group and
d) a polyethylene glycol having a molar mass in the range from 750 to 10,000,
with maintenance of an NCO/OH equivalent ratio, based on all the starting components a) to d), of from 0.7:1 to 1.2:1.

2. Polyurethanes as claimed in claim 1, characterized in that component b) is polyunsaturated.

3. Polyurethanes as claimed in claim 1, characterized in that component b) is a (meth)acrylate of a diol.

4. Polyurethanes as claimed in claim 1, characterized in that component b) is a polyethylene glycol ether of an unsaturated C₁₀-C₂₀-fatty alcohol.

5. Polyurethanes as claimed in claim 1, characterized in that component b) is a product of the reaction of an unsaturated fatty acid with glycidyl versatate.

6. Polyurethanes as claimed in claim 1, characterized in that the higher-functional component c) is a bishydroxyalkane carboxylic acid.

7. The use of the polyurethanes of claim 1 as reactive emulsifiers for hydrophobic synthetic resins which can be cured by means of a free-radical reaction and/or oxidatively, in the preparation of aqueous synthetic resin dispersions.

8. An aqueous dispersion of hydrophobic synthetic resins which can be cured by means of a free-radical reaction and/or oxdidatively, which contains an unsaturated polyurethane as claimed in claim 1.

## Revendications

1. Polyuréthanes insaturés avec une proportion de 20 à 80 % en poids d'unités de polyéthylèneglycol, qui peuvent être préparés par réaction de
a) au moins un polyisocyanate organique,
b) un alcool gras insaturé, son éther de polyalkylèneglycol ou un ester d'acide insaturé contenant un groupe hydroxyle,
c) un ou plusieurs diols qui contiennent en outre au moins un autre groupe hydroxyle ou un autre groupe carboxyle et
d) un polyéthylèneglycol de masse molaire dans le domaine de 750 à 10 000,
en respectant une proportion d'équivalents NCO/OH, par rapport à tous les constituants de départ a) à d), de 0,7:1 à 1,2:1.

2. Polyuréthanes selon la revendication 1, caractérisés en ce que le constituant b) est insaturé plusieurs fois.

3. Polyuréthanes selon la revendication 1, caractérisés en ce que le constituant b) est un (méth)acrylate d'un diol.

4. Polyuréthanes selon la revendication 1, caractérisés en ce que le constituant b) est un éther polyéthylèneglycolique d'un alcool gras en C₁₀-C₂₀ insaturé.

5. Polyuréthanes selon la revendication 1, caractérisés en ce que le constituant b) est un produit de réaction d'un acide gras insaturé avec l'ester glycidylique de l'acide versatique.

6. Polyuréthanes selon la revendication 1, caractérisés en ce que le constituant à fonctionnalité supérieure c) est un acide bishydroxyalcanecarboxylique.

7. Utilisation des polyuréthanes de la revendication 1 en tant qu'émulsifiants réactifs pour des résines artificielles hydrophobes, durcissables par voie radicalaire et/ou oxydante, dans la préparation de dispersions aqueuses de résines artificielles.

8. Dispersion aqueuse de résines artificielles hydrophobes, durcissables par voie radicalaire ou oxydante, caractérisée en ce qu'elle contient un polyuréthane insaturé selon la revendication 1.
